# EUROPEAN PATENT APPLICATION

(11) **EP 2 896 445 A1**
(43) Date of publication of application: **22.07.2015**
(21) Application number: 13837521.7
(22) Date of filing: 06.09.2013
(51) Int. Cl.: B01D 33/06, B63B 13/00

(54) **FILTRATION DEVICE, FILTER USED THEREIN, AND FILTER ELEMENT THEREOF**

(30) Priority: 14.09.2012 JP 2012202709; 26.08.2013 JP 2013174083
(71) Applicant: Sumitomo Electric Industries, Ltd., Osaka-shi, Osaka 541-0041 (JP)
(72) Inventor: UEYAMA, Munetsugu, Osaka-shi Osaka 554-0024 (JP); MORI, Masaki, Osaka-shi Osaka 554-0024 (JP); KANAZAWA, Shinichi, Osaka-shi Osaka 554-0024 (JP); NAKAI, Ryusuke, Osaka-shi Osaka 554-0024 (JP)
(74) Representative: Boult Wade Tennant
(86) International application number: PCT/JP2013/074090
(87) International publication number: WO 2014/042093

(57) **Abstract**

A filtering apparatus includes a cylindrical filter F having a cylinder axis in a vertical direction, and a casing C surrounding the filter F, in which untreated water a is filtered through the filter F from an outer circumferential surface to an inner circumferential surface of the filter F, and the resulting filtered water a' is guided to the outside of the casing C. The filter F includes a plurality of divided filters arranged in the direction of the cylinder axis, and the divided filters can be easily repaired and replaced. The divided filters can be connected and integrated together via reinforcing rods 33 by using threaded connections 36, and can be individually detached. When a sealing member 38 is provided between upper and lower facing surfaces of the divided filters, the untreated water does not flow from an upper surface and a lower surface of the divided filters, and the sealing member is rotated together with the filter and does not slide. Thus, degradation of the sealing member is suppressed and a rotational driving force can also be reduced. A separable reinforcing body 40 including an intermediate support disk 42 and connecting rods 43 is preferably provided in the filter.

## Description

### Technical Field

The present invention relates to a filtering apparatus such as an apparatus for treating ballast water for a ship, the apparatus being used for conducting physical treatment and chemical treatment of water taken up, such as seawater, a filter used in the filtering apparatus, and a filter element of the filtering apparatus.

### Background Art

Ballast water is water used as ballast (ballast cargo, weight loaded on the bottom of the hull) of a ship. For example, when a ship leaves a port with no cargo, water such as seawater is taken up at the departure port and stored in ballast tanks. The water is then discharged in place of loading cargo at a destination port at which the ship makes a stop.

In this case, when contaminants, aquatic organisms, etc. in the departure port are mixed in the ballast water, the ecosystem in the destination port may be disrupted. For this reason, a ballast water treatment apparatus for removing, from the water, organisms and contaminants having a size of, for example, 50 µm or more is placed in the ship.

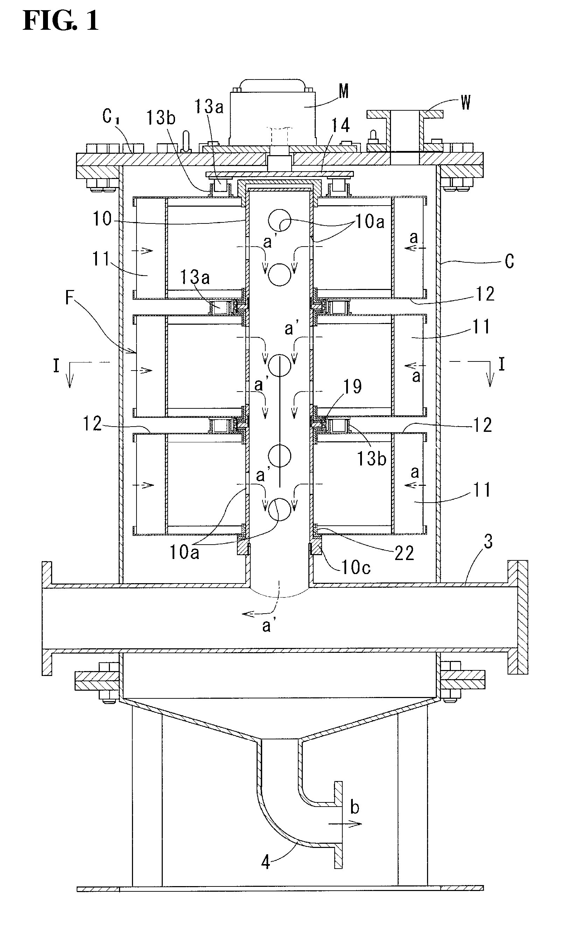

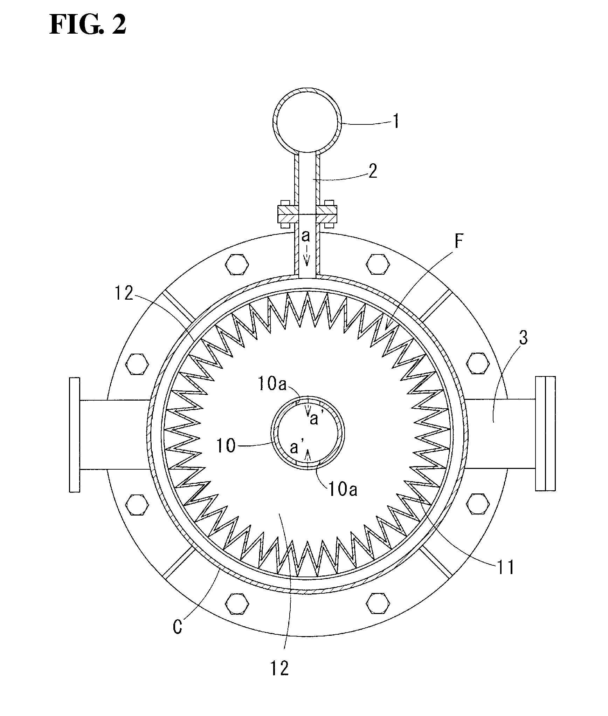

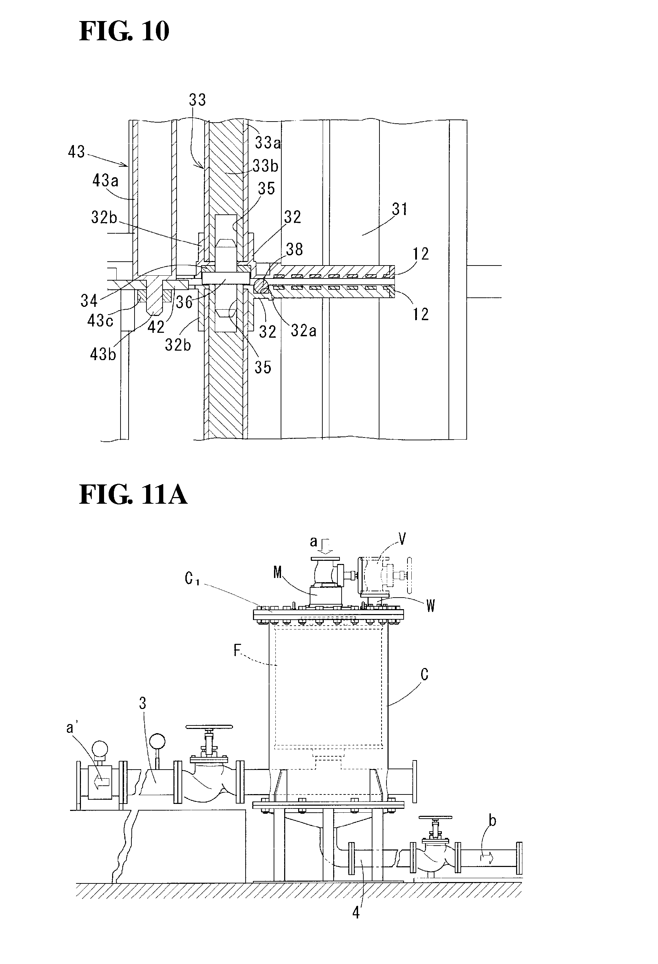

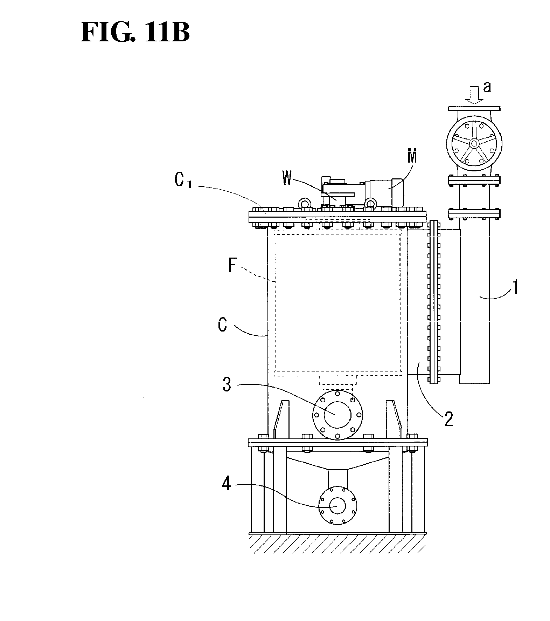

Figures 11A and 11B show a typical known structure of such an apparatus for treating ballast water for a ship. The apparatus includes a filter F that is arranged in a cylindrical manner so as to surround a cylindrical shaft (refer to reference numeral 10 in Fig. 1) that extends in a vertical direction and that is rotatable about the cylindrical shaft, and a cylindrical casing C surrounding the filter F. Water a which has been taken up (water to be treated, hereinafter referred to as "untreated water") is fed from a seawater inlet of a ship to an inflow pipe 1. The water a flows from an outlet 2 that extends in the longitudinal direction of the inflow pipe 1 to the inside of the casing C, and is filtered by the filter F (refer to Fig. 2).

The filtration is performed by permeating the untreated water a from an outer circumferential surface of the filter F toward the inner circumferential surface thereof. The resulting filtered water (treated water) a' is led into the cylindrical shaft, then guided to the outside of the casing C through a guide pipe 3, and stored in a ballast tank. Discharge water b that has not been filtered by the filter F is led to a bottom portion of the casing C and then discharged to the outside (sea) through a discharge pipe 4.

In this case, the filter F is rotated by a motor M on a casing top plate C₁. Organisms, etc. captured by the filter F precipitate and are removed from the discharge pipe 4 together with the discharge water b (refer to Claim 1 and Fig. 1 of PTL 1).

### Citation List

### Patent Literature

PTL 1: Japanese Patent No. 4835785

### Summary of Invention

### Technical Problem

The filter F of the apparatus for treating ballast water for a ship in the related art is housed as an integral component in the casing C. When the filter F is repaired or replaced, it is necessary to remove the whole filter F from the casing C at one time.

However, even a small treatment apparatus of this type has a height of about 1 m. In the case where the treatment apparatus is installed in a ship and the filter F is removed, at least 1 m or more of a space is necessary above the treatment apparatus. Thus, in a narrow interior of a ship, the space for removing the filter F is not effectively used. In addition, since the interior of a ship is narrow, the replacement of the filter F must be performed mainly by human power. It is very difficult to move the filter F having a height of no less than 1 m by human power, and the work efficiency is poor.

A filtering apparatus which includes a cylindrical filter and for which a large installation space cannot be ensured in the vertical direction has the same problem as that in the apparatus for treating ballast water for a ship.

In view of the above circumstances, an object of the present invention is to improve the work efficiency of filter repair and replacement.

### Solution to Problem

In order to achieved the above object, the present invention provides a filtering apparatus including a cylindrical filter having a cylinder axis in a vertical direction and a casing surrounding the filter, in which untreated water is filtered through the filter from an outer circumferential surface to an inner circumferential surface of the filter, the resulting filtered water is guided to the outside of the casing, and discharge water that has not been filtered by the filter is discharged to the outside of the casing. In the filtering apparatus, the filter includes a plurality of divided filters arranged in the direction of the cylinder axis, and the divided filters can be connected and integrated together, and can be individually detached.

In addition, the present invention provides a filtering apparatus including a cylindrical shaft that extends in a vertical direction; a filter that is arranged in a cylindrical manner so as to surround the cylindrical shaft and that is rotatably provided around the cylindrical shaft; and a casing surrounding the filter, in which untreated water is filtered through the filter from an outer circumferential surface to an inner circumferential surface of the filter, the resulting filtered water is guided into the cylindrical shaft and then guided to the outside of the casing, and discharge water that has not been filtered by the filter is discharged to the outside of the casing. In the filtering apparatus, the filter includes a plurality of divided filters arranged in an axial direction of the cylindrical shaft, and the divided filters can be individually detached from the cylindrical shaft.

In the above structures and embodiments described below, the term "untreated water" appropriately covers various types of liquids other than water to be filtered, for example, chemical liquids, and the like.

### Advantageous Effects of Invention

According to the present invention, a filter includes a plurality of divided filters as described above, and thus the operations of filter repair and replacement are performed smoothly.

### Brief Description of Drawings

[Fig. 1] Figure 1 is a cross-sectional view of an embodiment of a filter unit of an apparatus for treating ballast water for a ship, the apparatus being a filtering apparatus according to the present invention.
[Fig. 2] Figure 2 is a cross-sectional view taken along line I-I in Fig. 1 of the embodiment.
[Fig. 3A] Figure 3A is an enlarged view of a relevant part between divided filters shown in Fig. 1.
[Fig. 3B] Figure 3B is an enlarged view of a lower relevant part of a divided filter shown in Fig. 1.
[Fig. 4] Figure 4 is an enlarged partial cross-sectional view of a relevant part of another embodiment.
[Fig. 5] Figure 5 is a perspective view of another embodiment, a part of which is omitted.
[Fig. 6] Figure 6 is a schematic cross-sectional view of the other embodiment.
[Fig. 7] Figure 7 is an exploded perspective view of a relevant part of the other embodiment.
[Fig. 8A] Figure 8A is a partially cutaway perspective view of a divided filter of the other embodiment.
[Fig. 8B] Figure 8B is a cut front view of the divided filter.
[Fig. 9A] Figure 9A is an enlarged view of an upper relevant part of an uppermost divided filter shown in Fig. 6.
[Fig. 9B] Figure 9B is an enlarged view of a relevant part between divided filters shown in Fig. 6.
[Fig. 9C] Figure 9C is an enlarged view of a lower relevant part of a lowermost divided filter shown in Fig. 6
[Fig. 10] Figure 10 is an enlarged view of a relevant part of Fig. 9B.
[Fig. 11A] Figure 11A is a schematic front view of an example of an apparatus for treating ballast water for a ship.
[Fig. 11B] Figure 11B is a schematic right side view of the example. Reference Signs List

- C: casing
- C₁: casing top plate
- F: filter
- M: motor
- V: valve
- W: overflow water-discharging pipe
- a: untreated water
- a': treated water
- 1: inflow pipe
- 2: outlet
- 3: guide pipe
- 3a: branch pipe
- 4: discharge pipe
- 10: cylindrical shaft
- 10a: through-hole
- 10b: lower-stage flange
- 10c: receiving seat
- 11: divided filter
- 12: disk
- 13a, 13b: engagement element for integrating divided filters
- 14: driving plate
- 15: spacer
- 16: bush
- 17: inner ring
- 17a: wall
- 18: outer ring
- 18a: wall
- 19: sealing ring
- 19': annular sealing member
- 21: spacer
- 22: bush
- 23: sealing ring
- 31: divided filter
- 32: reinforcing plate
- 32a: groove
- 32b: tubular portion
- 33: reinforcing rod
- 33a: tubular member
- 33b: rod member
- 34: washer
- 35: tapped hole
- 36: double-end threaded bolt
- 38: sealing member (O-ring)
- 39: bolt
- 40: reinforcing body
- 42: intermediate support disk
- 43: connecting rod
- 43a: tubular member
- 43b: bolt
- 43c: nut
- 51, 52: upper and lower support disks of filter
- 54: rotation receiver
- 54a: cross-shaped groove
- 54b: cross-shaped engagement element

### Description of Embodiments

A filtering apparatus according to the present invention is characterized by a filter including a plurality of divided filters arranged in a vertical direction and in that each of the divided filters can be individually detached as described above.

When a filter of this type of filtering apparatus is clogged, the filtering capacity is restored by reverse cleaning or the like. In the case where the filtering capacity cannot be restored nevertheless, the filter is repaired or replaced. In such a case, when the filter includes a plurality of divided filters, a divided filter (filter element) that can no longer be used is detached and repaired, or replaced with a new filter element corresponding thereto.

In this case, for example, when a cylindrical filter F having a diameter of 1 m and a height of 90 cm includes three divided filters arranged in a height direction thereof, the divided filters each have a height of 30 cm and can have a size and a weight that can be easily moved by human power. In addition, since each of the divided filters has a height of 30 cm, as long as there is, in an upper portion of the filtering apparatus, a space which has a height higher than that of the divided filter and in which the divided filter can be moved, the divided filter can be repaired and replaced, and can be moved even by human power, thus improving the work efficiency.

The divided filters may be arranged so as to surround the cylindrical shaft on a central axis in the casing and thus supported as in the related art. Alternatively, the cylindrical shaft may be omitted and the respective divided filters may be connected and fixed together and may be rotatable. In the former case, the divided filters are supported by the cylindrical shaft, and the filter rotates while rotation deviation is suppressed by the cylindrical shaft. In the latter case, since the cylindrical shaft is not provided, it is necessary that the divided filters be connected and integrated together and rotation deviation be suppressed by the integration, and that the divided filters can be individually detached.

In the filtering apparatus having any of the above structures, each of the divided filters may include a filter element between upper and lower ring-shaped disks, a plurality of reinforcing rods may be disposed between the upper ring-shaped disk and the lower ring-shaped disk and in the circumferences of the ring-shaped disks, and an upper divided filter and a lower divided filter may be integrated by connecting and fixing the reinforcing rods. With this structure, the rigidity of the divided filters is improved. The improvement in the rigidity stabilizes rotation. This structure including the reinforcing rods is effective for a filtering apparatus that does not include a cylindrical shaft.

Any appropriate structure may be used for the connection and fixation of the reinforcing rods of the upper and lower divided filters. For example, the reinforcing rods of the upper and lower divided filters may be connected and fixed by a threaded connection between ends of the upper and lower reinforcing rods. In the case of a threaded connection, connection can be established by screwing a reinforcing rod from above, and thus the upper and lower divided filters can be integrated with good work efficiency.

A reinforcing body that supports the divided filters may be provided in the casing. Thus, the rigidity of the filter can be further improved.

The reinforcing body may include, for example, an upper support disk to which the uppermost divided filter is fixed in the same axis, a lower support disk to which a lowermost divided filter is fixed in the same axis, and a plurality of connecting rods which extend in the vertical direction and which are disposed between the upper support disk and the lower support disk and in the circumferences of the support disks to integrate the two support disks and hold the divided filters.

In this case, each of the connecting rods may include divided connecting rods arranged in the vertical direction, the divided connecting rods may be connected together with a ring-shaped intermediate support disk therebetween, and an upper divided connecting rod and a lower divided connecting rod which are disposed with the intermediate support disk therebetween may be displaced from each other in a circumferential direction of the support disk. With this structure, rotation of the filter is supported by the intermediate support disk and the upper and lower connecting rods that are displaced from each other in the circumferential direction. Thus, effective drag is exerted against a twist during rotation of the filter.

In the filtering apparatus having any of the above structures, the divided filters may each be configured so that the untreated water is guided from the outer circumferential surface into the inner circumferential surface without flowing from an upper surface or a lower surface, and a sealing member may be interposed between the entire circumferences of facing surfaces of adjacent upper and lower divided filters.

When each of the divided filters is configured so that untreated water is filtered while being guided from the outer circumferential surface to the inner circumferential surface without flowing from an upper and a lower surface of the filter as described above, mixing of the untreated water with treated water (filtered water) is prevented by sealing between the outer circumferential surface and the inner circumferential surface at any position. On the other hand, even when the filter includes a plurality of divided filters, the divided filters integrally rotate.

Therefore, when the sealing between the untreated water and the treated water is performed on facing surfaces of upper and lower divided filters, the outer circumferential surface and the inner circumferential surface of the filter are partitioned by the sealed portion, thereby preventing untreated water that flows from the outer circumferential surface from being mixed with treated water that is led to the inside of the filter. In addition, the upper and lower divided filters integrally rotate, and the torque of the rotation does not act on the sealed portion (a sliding surface is not formed on the sealed portion). Therefore, degradation of the sealed portion is suppressed compared with the case where the torque acts on the sealed portion. Furthermore, the torque due to sliding of the sealed portion is larger than a torque in the rotating portion due to a bearing or the like other than the sealed portion. Since the toque does not act on the sealed portion, a rotational driving force of the filter can also be reduced.

An example of an appropriate sealing structure is a structure in which a sealing member is interposed between the entire circumferences of facing surfaces of adjacent upper and lower divided filters. Alternatively, for example, one wall that extends in the vertical direction may be provided on an entire circumference of one of the facing surfaces of the adjacent upper and lower divided filters, another wall facing the entire circumference of the one wall may be provided on the other entire circumference of the facing surfaces, and a sealing member may be disposed over the entire circumference between the two walls.

With this sealing structure, a compressive load due to the self-weight of the divided filters is not easily applied to the sealing member, and thus degradation of the sealing member can be suppressed.

The filtering apparatus having any of the above structures can be used for treating ballast water for a ship, for water supply and sewage, for treating industrial wastewater, for treating seawater, for treating river water, for seawater desalination treatment, for a chemical liquid, etc. The filtering apparatus can be used for various types of filtering apparatuses including a cylindrical filter having a cylinder axis in a vertical direction and a casing surrounding the filter, in which untreated water is filtered through the filter from an outer circumferential surface to an inner circumferential surface thereof, the resulting filtered water is guided to the outside of the casing, and discharge water that has not been filtered by the filter is discharged to the outside of the casing.

A filter used in the filtering apparatus having any of the above structures may have a structure in which the divided filters are integrally connected together in the vertical direction and a sealing member is interposed between the entire circumferences of facing surfaces of adjacent upper and lower divided filters. Furthermore, regarding the sealing structure, one wall that extends in the vertical direction may be provided on an entire circumference of one of the facing surfaces of the adjacent upper and lower divided filters, another wall facing the entire circumference of the one wall may be provided on the other entire circumference of the facing surfaces, and the sealing member may be disposed over the entire circumference between the two walls.

Each of the divided filters may have a structure in which ring-shaped disks are fixed to an upper surface and a lower surface of a cylindrical filter element in the same axis, and a plurality of reinforcing rods are disposed between the upper ring-shaped disk and the lower ring-shaped disk and in the circumferences of the ring-shaped disks, and an upper divided filter and a lower divided filter may be integrated by connecting and fixing the reinforcing rods. The reinforcing rods of the upper and lower divided filters may be connected and fixed by a threaded connection between ends of the upper and lower reinforcing rods.

Furthermore, the filter is preferably reinforced by various means so as to enhance the rigidity. For example, the divided filters may each be supported by a reinforcing body provided in the casing, and the reinforcing body may include an upper support disk to which an uppermost divided filter is fixed in the same axis, a lower support disk to which a lowermost divided filter is fixed in the same axis, and a plurality of connecting rods which extend in the vertical direction and which are disposed between the upper support disk and the lower support disk and in the circumferences of the support disks to integrate the two support disks and hold the divided filters.

### EXAMPLE 1

Figures 1, 2, 3A, and 3B show an embodiment of an apparatus for treating ballast water for a ship, the apparatus being a filtering apparatus according to the present invention. In the present embodiment, the filter F in the apparatus for treating ballast water for a ship shown in Figs. 11A and 11B includes three divided filters (11, 11, and 11) arranged in the vertical direction. The number of divisions of the filter F is appropriately determined to be 2, 4, or the like on the basis of the installation space, the filtration performance, etc.

In Figs. 1, 2, 3A, and 3B, reference characters the same as those in Figs. 11A and 11B denote the same components. Reference character W denotes an overflow water-discharging pipe. By releasing a valve V (refer to Fig. 11A) provided at the end of the overflow water-discharging pipe W, untreated water a overflowing from a casing C is discharged to the outside. In Fig. 1, both ends of a guide pipe 3 extend to both side faces of the casing C and can be open. This is because a pipe connected to a ballast tank can be connected to each of the longitudinal ends of the guide pipe 3, and a cylindrical shaft 10 is stably supported.

The filter F is arranged in a cylindrical manner so as to surround the cylindrical shaft 10 that extends in the vertical direction, and is rotatably provided around the cylindrical shaft 10 as a center. Through-holes 10a are formed in the cylindrical shaft 10 so as to correspond to an inner circumferential surface of each divided filter 11 so that filtered water (treated water) a' from the respective divided filters 11 flows into the cylindrical shaft 10. The positions and the numbers of the through-holes 10a are appropriately determined on the basis of experiments or the like such that the treated water a' flows smoothly from the filter F (divided filters 11) into the cylindrical shaft 10.

Each of the divided filters 11 is a pleated filter produced by folding a filter cloth so as to have alternating peaks and recesses in a radial direction (an accordion shape), as shown in Fig. 2. The upper and lower portions of each of the divided filters 11 are supported and fixed with ring-shaped disks 12 by resin impregnation. The ring-shaped disks 12 each have a flange on the entire circumference thereof, have a width (in the radial direction) larger than that of the divided filter 11, and are composed of an acrylonitrile-butadiene-styrene copolymerized synthetic resin (ABS resin). Accordingly, untreated water (such as seawater) a that is fed from an outlet 2 flows from the outer circumferential surface to the inner circumferential surface of the divided filter 11, and is guided into the cylindrical shaft 10 without flowing out from the upper and lower surfaces of the divided filter 11. The material (filter cloth) of the filter F may be appropriately selected from materials that have hitherto been used. For example, a polyester or the like is used. The inner circumferential surface, the outer circumferential surface, or both the inner and outer circumferential surfaces of each of the divided filters 11 may be reinforced by providing a punching metal thereon.

Tubular engagement elements 13a and 13b that are fitted to each other are provided on facing surfaces of adjacent upper and lower divided filters 11 so as to face each other. The engagement elements 13a and 13b have different diameters, and the engagement element 13a is fitted in the engagement element 13b. With this structure, the divided filters 11 disposed on and under the engagement elements 13a and 13b are integrally rotated about the cylindrical shaft 10. A plurality of pairs of engagement elements 13a and 13b are provided at regular intervals on the circumference. The number and the positions of the engagement elements 13a and 13b are not particularly limited as long as the divided filters 11 can be integrally and stably rotated.

A disk 12 disposed on the upper surface of the uppermost divided filter 11 also has an engagement element 13b thereon. The engagement element 13b is fitted into an engagement element 13a of a driving plate 14 driven by a motor M. The divided filters 11 are integrally rotated by the motor M through the driving plate 14 and the engagement elements 13a and 13b.

The cross-sectional shape of the engagement elements 13a and 13b is not limited to a circle, and may be a polygon or the like as long as the engagement elements 13a and 13b can be fitted to each other. The shape of the inner engagement element 13a that is fitted in the engagement element 13b is not necessarily a tubular shape.

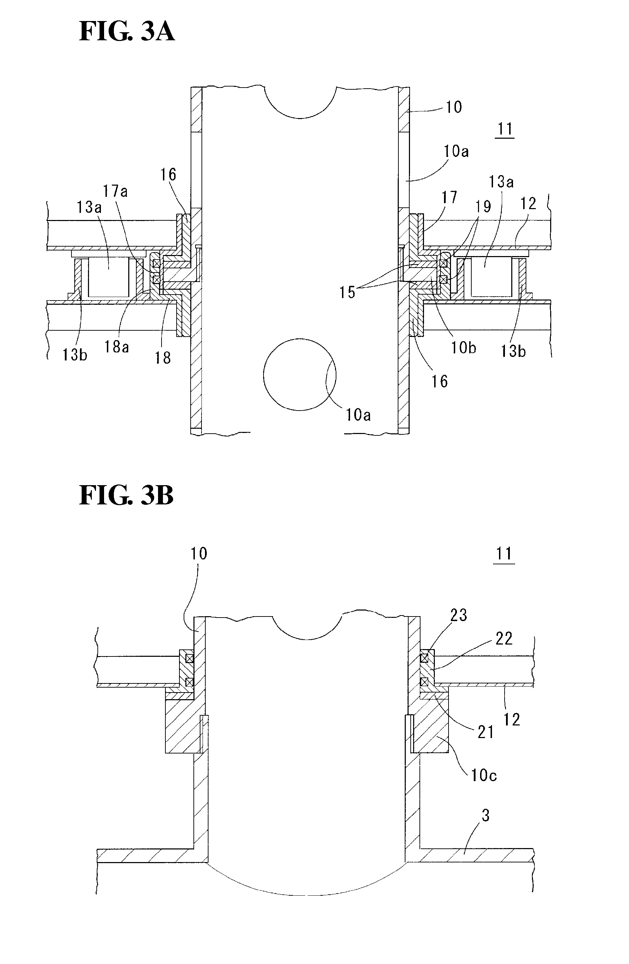

The cylindrical shaft 10 is formed of three stainless members each having a length corresponding to each divided filter 11. The divided cylinders are integrally connected to each other by a threaded connection. Each of the divided filters 11 is fitted to the corresponding divided cylinder from an upper end of the divided cylinder. As shown in Fig. 3A, a divided filter 11 is placed on a lower-end flange 10b of the screw-connected divided cylinders with an annular, ultrahigh-molecular-weight polyethylene spacer 15 therebetween, thus being supported by the cylindrical shaft 10.

Furthermore, an annular, ultrahigh-molecular-weight polyethylene bush 16 having an L-shaped cross section is fitted and fixed to an inner circumference of the disk 12 of the divided filter 11, the inner circumference corresponding to the connecting portion of the divided cylinders, with a SUS 316L inner ring 17 or a SUS 316L outer ring 18 therebetween (refer to Fig. 3A).

Each of the rings 17 and 18 has a cross-section resembling an L-shape connected to an inverted L-shape, the inverted L-shape being vertically flipped. The entire circumference where an end of the inner ring 17 faces an end of the outer ring 18 forms a wall 17a of the inner ring 17 and a wall 18a of the outer ring 18, the walls 17a and 18a facing each other and extending in the vertical direction. Sealing rings 19 having an X-shaped cross section are interposed between the wall 17a and the wall 18a. Since the sealing rings 19 are provided, even when untreated water a flowing in the casing C reaches a portion of the wall 18a of the outer ring 18, flowing of the untreated water a on an inner circumferential surface of the divided filter 11, the inner circumferential surface being a flowing portion for treated water a', is prevented by the sealing rings 19.

A bush 22 composed of a fiber reinforced plastic (FRP) is fitted and fixed to an inner circumferential surface of a lower disk 12 of the lowermost divided filter 11. The bush 22 is disposed on a receiving seat 10c of the cylindrical shaft 10 with an annular, ultrahigh-molecular-weight polyethylene spacer 21 therebetween (refer to Fig. 3B). Sealing rings 23 having an X-shaped cross section are interposed between the bush 22 and the cylindrical shaft 10, thus establishing shaft sealing. With the sealing rings 23, the divided filters 11 are rotated about the cylindrical shaft 10 in a watertight manner.

The present embodiment has the structure described above. When the filter F is rotated and untreated water a is fed to an inflow pipe 1, the untreated water a is introduced from the outlet 2 of the inflow pipe 1 to the inside of the casing C and flows in the filter F (divided filters 11).

The untreated water a flows from the outer circumferential surface toward the inner circumferential surface of each of the divided filters 11 to be subjected to a filtering operation by the divided filters 11. The filtered water (treated water) a' flows in the cylindrical shaft 10, is then guided to the outside of the casing C through the guide pipe 3, and is used as ballast water. Individuals, such as organisms, captured by the divided filters 11 flow down to a bottom portion of the casing C together with discharge water b that has not been filtered, and are then discharged from a discharge pipe 4 to the outside.

In this case, the cylindrical shaft 10 is fixed, and rotation of the divided filters 11 with respect to the cylindrical shaft 10 is performed through the spacers 15 and 21 and the bushed 16 and 22. In addition, rotation deviation of the filter F (divided filters 11) is suppressed by the cylindrical shaft 10. Furthermore, the spacer 15, etc. are formed of a low-frictional, annular, ultrahigh-molecular-weight polyethylene or the like. Thus, the filter F (including divided filters 11) is smoothly rotated with respect to the cylindrical shaft 10.

The filter F is rotated through the spacer 15 and the bush 16, and the inner ring 17 and the outer ring 18 are integrally rotated with the divided filters 11. Therefore, sliding of the sealing rings 19 does not occur. Accordingly, abrasion of the sealing rings 19 due to sliding also does not occur, and mixing of the untreated water a with the treated water a' is reliably prevented by the sealing.

In addition, the divided filters 11 are integrally rotated and the torque of the rotation does not act on the sealing rings 19. Thus, degradation of the sealing rings 19 is suppressed compared with the case where the torque of the rotation acts on the sealing rings 19. Furthermore, since the torque does not act on the sealing rings 19, a rotational driving force of the filter F by the motor M is also reduced compared with the case where rotation is performed while the sealing rings 19 slide (shaft sealing).

When, for example, the divided filters 11 are clogged by a treatment operation for producing ballast water, and repair or replacement of the divided filters 11 becomes necessary, the repair or replacement is performed by detaching the top plate C₁ of the casing C, the top plate C₁ having the motor M, etc. thereon, detaching a cover of the cylindrical shaft 10, and then detaching the divided filters 11 from the cylindrical shaft 10 by lifting the divided filters 11 upward. In this case, each of the divided cylinders constituting the cylindrical shaft 10 may also be individually detached if this operation is convenient for the repair or replacement of the divided filters 11.

In the above embodiment, the form of the divided filters 11, the fitting structure of the engagement elements 13a and 13b, the materials and the shapes of the spacer 15, the bush 16, the inner ring 17, and the outer ring 18 can be appropriately changed as long as the operations and advantages of the present invention can be achieved. Note that, in an apparatus exposed to seawater as in the present embodiment, the cost can be reduced by using a salt-resistant resin instead of a metal.

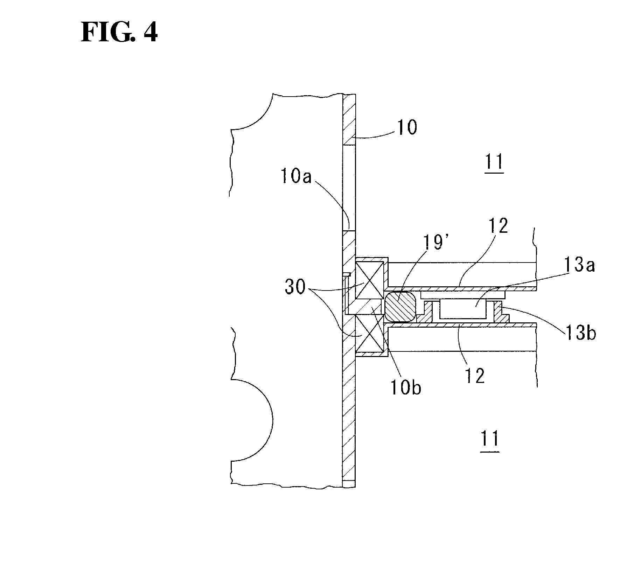

In addition, adjacent upper and lower divided filters 11 are integrally rotated, and thus mixing of the untreated water a and the treated water a' can be prevented by sealing the entire circumference between facing surfaces of the divided filters 11. Accordingly, besides the form of the sealing rings 19 described above, a form being capable of reliably achieving the operation may be selected as required. An example thereof is a form of an annular sealing member 19' such as an O-ring, which is disposed over the entire circumference between the facing surfaces, as shown in Fig. 4.

Furthermore, in the present embodiment, the entire circumference between facing surfaces of the divided filters 11 is sealed, and a particularly high sealing property is not required between the cylindrical shaft 10 and each of the divided filters 11. Accordingly, instead of the bearing structure including the spacer 15, the bush 16, and the like shown in Fig. 3A, various types of bearings 30 shown in Fig. 4, such as a rolling bearing and a sliding bearing, can be used. In such a case, the bearings 30 are fitted and fixed to the disks 12 of the divided filters 11, and the divided filters 11 can be fitted to the cylindrical shaft 10 with inner rings of the bearings 30.

In the present embodiment, a filtration treatment for removing, from seawater a, individuals such as organisms and contaminants having a size of 50 µm or more was conducted by using an actual apparatus (filtration capacity: 100 t/hour) having an outer diameter of a divided filter 11 of 700 mm, a height of a divided filter 11 of 250 mm, and a weight of 40 kg by rotating a filter F with a motor M of 2.2 kW/200 V. A load current of the motor M was 6.5 to 7.0 A, and leakage of the individuals such as organisms in the treated water a' was 0.6 organisms/m³. With regard to these values, the load current was reduced by 15% and the leakage was reduced by 50% compared with a case where the shaft sealing structure shown in Fig. 3B was used between the cylindrical shaft 10 and adjacent upper and lower divided filters 11.

### EXAMPLE 2

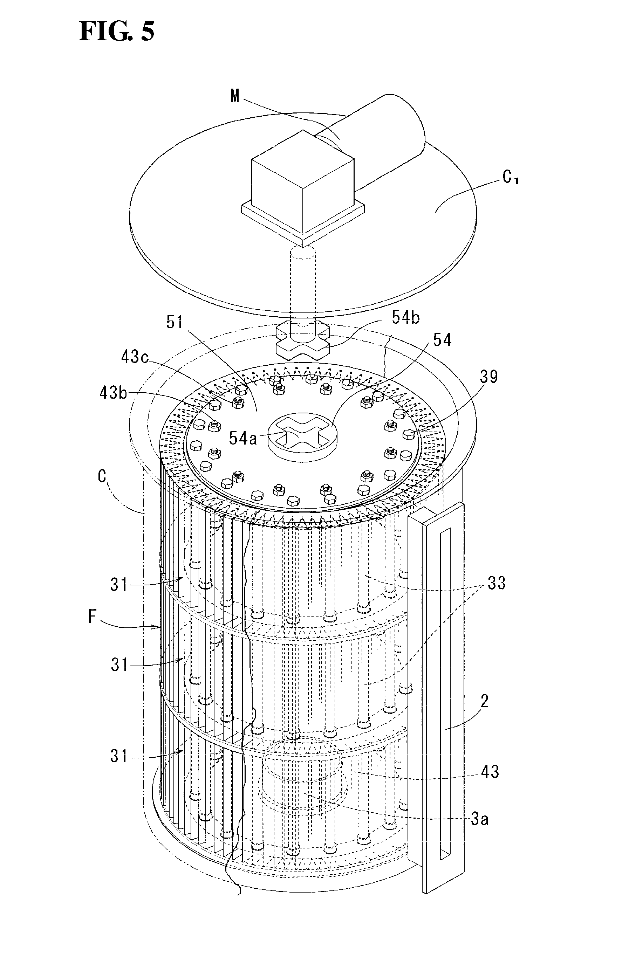

Figures 5 to 10 show another embodiment of an apparatus for treating ballast water for a ship, the apparatus being a filtering apparatus according to the present invention. In the present embodiment, a filter F includes three filters (31, 31, and 31) arranged in the vertical direction as in the embodiment described above. However, the present embodiment significantly differs from the above embodiment in that the cylindrical shaft 10 is omitted. In this type of treatment apparatus, a main component that is periodically replaced is the filter F, and the number of other components is preferably minimized so that the components do not disturb the replacement. Therefore, when the cylindrical shaft 10 is not provided, the replacement work of the filter F becomes smooth. Similarly, the number of divisions of the filter F is also appropriately determined to be 2, 4, or the like on the basis of the installation space, the filtration performance, etc. Reference characters the same as those in the above embodiment (Example 1) and Figs. 11A and 11B denote the same components.

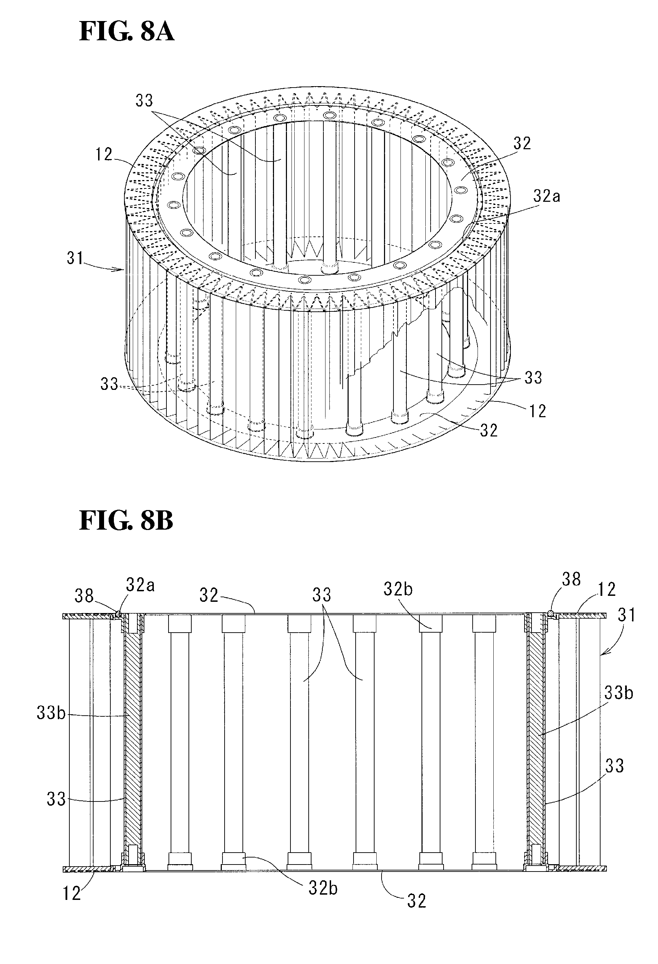

Divided filters 31 of this embodiment are fundamentally the same as the filter elements of the divided filters 11 described above. However, since the cylindrical shaft 10 is omitted, ring, disk-shaped reinforcing plates 32 are provided inside an upper surface and a lower surface of respective upper and lower ring-shaped disks 12. In the present embodiment, the ring-shaped disk 12 and the reinforcing plate 32 are formed as an integrally-molded resin article. The reinforcing plate 32 has, on the filter element side, a groove 32a having a U-shaped cross-section and arranged over the entire circumference (refer to Figs. 8A and 8B). An annular sealing member 38 such as an O-ring is fitted in the upper groove 32a. The sealing member 38 is pressed by a lower surface of an outer groove of a lower reinforcing plate 32 of an upper divided filter 31, and is in contact, under pressure, with the inner surface of the groove 32a and the lower surface to achieve sealing. The reinforcing plate 32 may be a component separated from the ring-shaped disk 12. In the case where the reinforcing plate 32 and the ring-shaped disk 12 are separate components, the ring-shaped disk 12 and the reinforcing plate 32 are integrated by welding, bonding, fitting with a screw, or the like. Reinforcing rods 33 that extend in the vertical direction are disposed on the circumference of the reinforcing plate 32 on the side (inside) opposite to the groove 32a of the reinforcing plate 32.

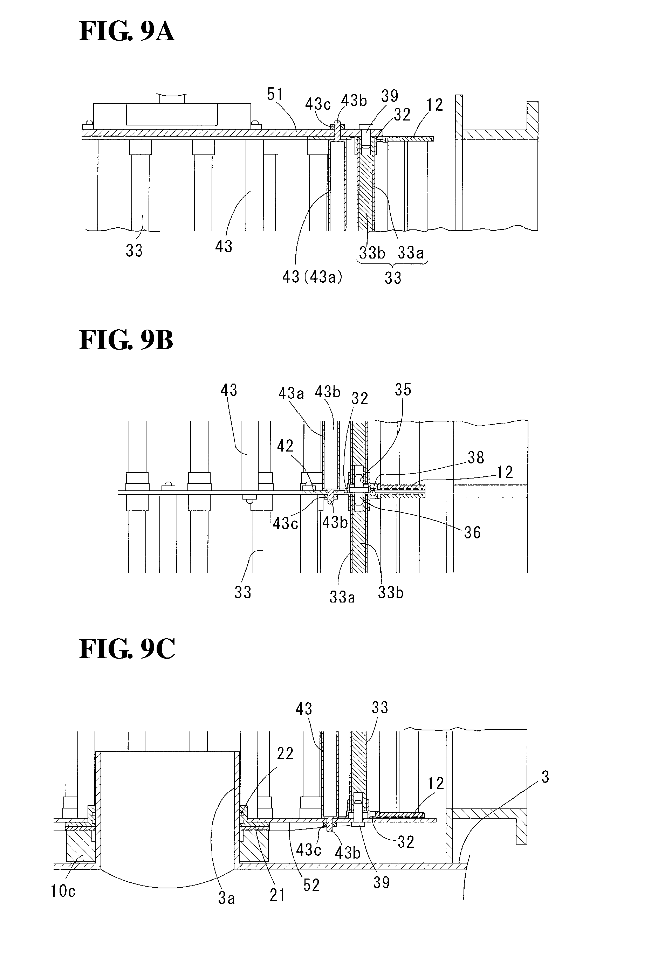

The reinforcing rods 33 each includes a stainless tubular member 33a and a resin rod member 33b inserted in the tubular member 33a. An end of the reinforcing rod 33 is fitted in a tubular portion 32b of the reinforcing plate 32. The rod member 33b has tapped holes 35 at an upper end and a lower end on the central axis thereof. The reinforcing rods 33 are fixed to the reinforcing plates 32 by screwing a double-end threaded bolt 36 with a flange in the tapped holes 35 (refer to Figs. 9B and 10). A screw rod portion at one end of the double-end threaded bolt 36 may be embedded in the rod member 33b when the rod member 33b is formed by molding a resin. The rod members 33b and the double-end threaded bolt 36 may be joined by insertion instead of screwing as long as a problem doe not occur. The number of the reinforcing rods 33 and the interval in the circumferential direction of the reinforcing rods 33 are appropriately determined in consideration of the strength of the divided filters 31, etc. The tapped hole 35 can be formed by embedding a screw nut. In the present embodiment, the reinforcing rods 33 are arranged at regular intervals around the circumference.

In the present embodiment, each of the reinforcing rods 33 is located inside an inner pleat of the pleated filter. Alternatively, the reinforcing rod 33 may be located between the pleats.

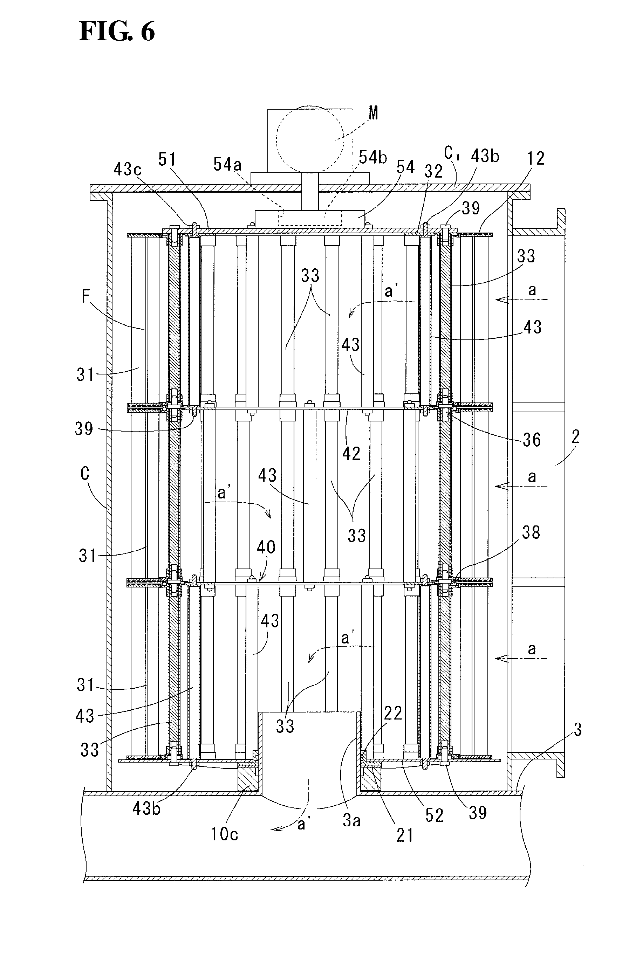

An upper divided filter 31 and a lower divided filter 31 are integrated as follows. First, in a state where a sealing member 38 is fitted in a groove 32a of a reinforcing plate 32 of a lower divided filter 31, a divided filter 31 in which a rod member 33b of a reinforcing rod 33 is not inserted is placed on the lower divided filter 31 on the same axis. In this case, the positions of the divided filters 31 are appropriately determined by fitting a tubular member 33a to a tubular portion 32b of the reinforcing plate 32. Next, the rod member 33b is inserted, and the lower end of the rod member 33b is fixed by screwing the tapped hole 35 to the bolt 36 with a resin washer 34 therebetween (refer to Figs. 6, 7, and 10). After the rod member 33b is fixed by screwing to the bolt 36, the tubular member 33a may be fitted to the rod member 33b.

In this integrated state, as shown in Figs. 9B and 10, the sealing member 38 is pressed by being sandwiched between upper and lower reinforcing plates 32. Therefore, even when untreated water a flowing in the casing C reaches a portion sealed by the sealing member 38, flowing of the untreated water a on an inner circumferential surface of the filter F, the inner circumferential surface being a flowing portion for treated water a', is prevented by the sealing member 38. An upper surface of an uppermost divided filter 31 and a lower surface of a lowermost divided filter 31 are respectively fixed to an upper support disk 51 and a lower support disk 52 by using a vis (bolt) 39 (refer to Figs. 9A and 9C). In this case, a sealing member 38 such as an O-ring is preferably disposed on the entire circumference between the uppermost divided filter 31 and the upper support disk 51 and between the lowermost divided filter 31 and the lower support disk 52.

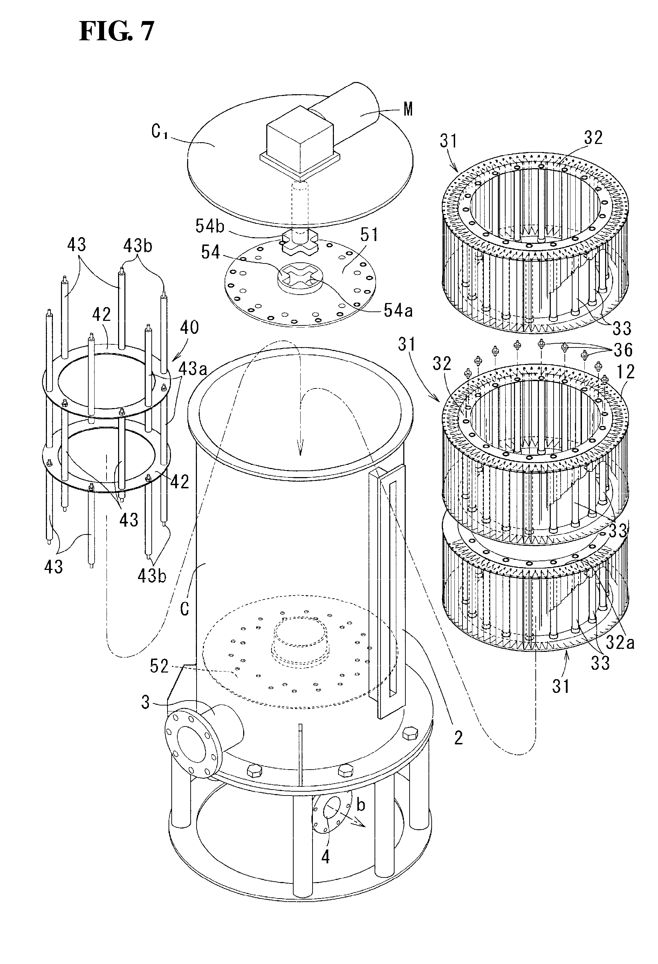

In the present embodiment, a reinforcing body 40 is provided inside the filter F in the casing C, and the filter F in which the cylindrical shaft 10 is omitted is reinforced by the reinforcing body 40. As shown in Fig. 7, the reinforcing body 40 includes ring, disk-shaped intermediate support disks 42 disposed inside reinforcing plates 32 of upper and lower divided filters 31, connecting rods 43 disposed between the upper and lower intermediate support disk 42 and projecting from an upper surface and a lower surface of the intermediate support disks 42, the upper support disk 51, and the lower support disk 52. The connecting rods 43 are each formed of a stainless tubular member 43a having bolts 43b at both ends thereof. The connecting rods 43 are connected together by penetrating the bolts 43b at the ends into the intermediate support disks 42, the upper support disk 51, or the lower support disk 52, and then screwing nuts 43c to projecting ends of the connecting rods 43. Since the connecting rods 43 each have a hollow tubular shape as described above, the weight of the reinforcing body 40 can be reduced.

The connection of the connecting rods 43 may be established by inserting a rod member 33b into a tubular member 43a, and then screwing a bolt 39 to a tapped hole 35 at an end of the rod member 33b, as in the reinforcing rods 33.

The number of stages of each of the connecting rods 43 is changed in accordance with the number of divisions of the filter F. For example, when the filter F includes four divided filters, the number of stages of the connecting rod 43 is 4. Alternatively, a single connecting rod 43 may be connected and fixed to the upper support disk 51 and the lower support disk 52 without dividing the connecting rod 43.

As described above, the reinforcing body 40 is fixed to the support disks 51 and 52, and the reinforcing rods 33 on the upper surface and the lower surface of the filter F (the upper surface of the uppermost divided filter 31 and the lower surface of the lowermost divided filter 31) are similarly fixed to the support disks 51 and 52 by using bolts 39, respectively. Accordingly, the divided filters 31 (filter F) and the reinforcing body 40 are integrated with each other through the support disks 51 and 52.

A rotation receiver 54 (corresponding to the driving plate 14 described above) having a large thickness is provided at the center of the upper surface of the upper support disk 51 (refer to Fig. 7). A cross-shaped engagement element 54b that is rotated by the motor M is fitted in a cross-shaped groove 54a of the rotation receiver 54, thereby rotating the support disk 51, that is, the filter F.

As in the embodiment described above, in the lower support disk 52, a bush 22 composed of an FRP is fitted and fixed with an annular ultrahigh-molecular-weight polyethylene spacer 21 therebetween, the spacer 21 being disposed on a receiving seat 10c of a branch pipe 3a of a guide pipe 3 (refer to Figs. 6 and 3B).

As described above, in the present embodiment, the divided filters 31 are supported and fixed by being sandwiched between the upper support disk 51 and the lower support disk 52 in the casing C, and the rigidity is increased by the reinforcing rods 33 and the reinforcing body 40.

This embodiment has the structure described above. As in the above embodiment, when the filter F is rotated and untreated water a is fed to an inflow pipe 1, the untreated water a is introduced from the outlet 2 of the inflow pipe 1 to the inside of the casing C and flows in the filter F (divided filters 31). The untreated water a flows from the outer circumferential surface toward the inner circumferential surface of each of the divided filters 31 to be subjected to a filtering operation by the filter F. The filtered water (treated water) a' flows in a hollow part in the filter F, is then guided to the outside of the casing C through the guide pipe 3, and is used as ballast water. Organisms, etc. captured by the divided filters 31 flow down to a bottom portion of the casing C together with discharge water b that has not been filtered, and are then discharged from a discharge pipe 4 to the outside.

In this case, rotation of the filter F is performed through the spacer 21 while being supported by a rotation axis of the motor M and the branch pipe 3a. In this case, rotation deviation of the filter F (divided filters 31) is suppressed by the reinforcing rods 33 and the reinforcing body 40. As in the above embodiment, the spacer 21 is formed of a low-frictional, annular ultrahigh-molecular-weight polyethylene. Thus, the filter F (including divided filters 11) is smoothly rotated.

Furthermore, the divided filters 31 are integrally rotated (rotated as a single filter F), and the torque of the rotation does not act on the sealing member 38 as in the embodiment described above. Thus, degradation of the sealing member 38 is suppressed compared with the case where the torque of the rotation acts on the sealing member 38. In addition, since the torque does not act on the sealing member 38, the rotational driving force of the filter F by the motor M also becomes smaller than that in a case where rotation is performed while the sealing member 38 slides (shaft sealing).

When, for example, the divided filters 31 are clogged by a treatment operation for producing ballast water, and repair or replacement of the divided filters 31 becomes necessary, the repair or replacement is performed as follows. First, the top plate C₁ of the casing C, the top plate C₁ having the motor M, etc. thereon is detached. Subsequently, the bolts 39 and the nuts 43c are detached to remove the support disk 51. Furthermore, the tubular members 33a of the reinforcing rods 33 are pulled out, and screwing of the rod members 33b is released to remove the rod members 33b. The divided filters 31 are then lifted upward. Thus, the repair or replacement of the divided filters 31 is performed. This operation is appropriately performed for the divided filters 31 disposed on each stage. In this case, the reinforcing body 40 may also be divided into the connecting rods 43, etc.

After the repair or replacement is finished, the divided filters 31 are attached by performing the above operation in reverse.

In the treatment apparatus of this embodiment, the cylindrical shaft 10 is not provided, and the reinforcing rods 33 and the reinforcing body 40 constitute a part of the filter F. Accordingly, the outer circumferential diameter formed by the reinforcing rods 33 can be increased. When the circumferential diameter is increased, the rigidity of the filter F is also increased. Therefore, the diameter of the whole apparatus can be increased. In the case where the processing volume is the same, the height of the apparatus can be reduced, which is advantageous in an apparatus for a ship. In the case of this apparatus for a ship, since the cylindrical shaft 10 is not provided, it is not necessary to pull out the divided filters 31 from the cylindrical shaft 10, and, for example, the divided filters 31 can be removed in an upper diagonal direction as long as the divided filters 31 can be removed from the casing C. Therefore, this treatment apparatus is also advantageous in that the divided filters 31 are easily replaced in a narrow space.

The reinforcing rods 33 and the connecting rods 43 may be constituted by a single reinforcing rod 33 that extends from the upper support disk 51 to the lower support disk 52 and a single connecting rod 43 that extends from the upper support disk 51 to the lower support disk 52, respectively. However, as in the present embodiment, when the connecting rods 43 of the reinforcing body 40 each include divided connecting rods arranged in the vertical direction so as to correspond to the number of divisions of the filter F (for example, three stages) and the connecting rods 43 in each stage are displaced from each other in the circumferential direction (in the embodiment, displaced by 60 degrees and arranged at regular intervals), effective drag is exerted against a twist during rotation of the filter F. Similarly, the reinforcing rods 33 may be displaced in the circumferential direction in each stage. In this case, an upper reinforcing rod 33 and a lower reinforcing rod 33 are not disposed in the same axis. Accordingly, the upper and lower reinforcing rods 33 are fixed by using bolts 39 instead of the bolt 36 with a flange. Each of the reinforcing rods 33 and the connecting rods 43 may include only the rod member 33b. Alternatively, each of the reinforcing rods 33 and the connecting rods 43 may include only the tubular member 33a and the tubular member 43a, respectively, as long as connection can be established. The connection is established by, for example, fitting and fixing a solid plug to each end of the tubular members 33a and 43a, and forming a bolt hole in the plug or forming a bolt on the plug.

In the present embodiment, an actual apparatus (filtration capacity: 250 m³/hour) having an outer diameter of a divided filter 31 of 810 mm, a height of a divided filter 31 of 400 mm, and a weight of 50 kg was prepared. A filtration treatment for removing, from seawater a, individuals such as organisms and contaminants having a size of 50 µm or more was conducted by rotating a filter F of the apparatus with a motor M of 2.2 kW/440 V. A load current of the motor M was 2.0 to 4.0 A, and leakage of individuals such as organisms in the treated water a' was 0.5 organisms/m³.

The above embodiments (Examples 1 and 2) are each an apparatus for treating ballast water for a ship. However, the division, etc. of the filtering filter F can be applied to not only an apparatus for treating ballast water for a ship but also other various filtering apparatuses that use a filter, such as a filtering apparatus for water supply and sewage, a filtering apparatus for treating industrial wastewater, a filtering apparatus for treating seawater, a filtering apparatus for treating river water, a filtering apparatus for seawater desalination treatment, and a filtering apparatus or a chemical liquid. In each of the filtering apparatuses in which cylindrical filters are arranged in the casing in a plurality of stages in the vertical direction, the structure of the present invention can be used in the sealing structures between the cylindrical shaft 10 and each divided filter 11, between divided filters 11, and between divided filters 31.

Furthermore, even in a filtering apparatus including the cylindrical shaft 10 shown in Fig. 1, the rigidity of the filter F can be enhanced by using the structure including the reinforcing rods 33 or the reinforcing body 40, or the reinforcing rods 33 and the reinforcing body 40. When the rigidity of the filter F is increased, the number of reinforcing members such as a punching metal can be reduced, and the circumferential diameter can be increased.

The materials of the components such as the disk 12, the reinforcing rod 33, and the connecting rod 43 are not limited to those described above, and any material may be used as long as the functions of the components can be achieved.

It is to be understood that the embodiments disclosed herein are only illustrative and are not restrictive in all respects. The scope of the present invention is defined by the claims described below, and it is intended that the scope of the present invention includes equivalents of the claims and all modifications within the scope of the claims.

## Claims

1. A filtering apparatus comprising a cylindrical filter having a cylinder axis in a vertical direction; and a casing surrounding the filter, wherein untreated water is filtered through the filter from an outer circumferential surface to an inner circumferential surface of the filter, the resulting filtered water is guided to the outside of the casing, and discharge water that has not been filtered by the filter is discharged to the outside of the casing,
the filter includes a plurality of divided filters arranged in the direction of the cylinder axis, and the divided filters can be connected and integrated together, and can be individually detached.

2. A filtering apparatus comprising a cylindrical shaft that extends in a vertical direction; a filter that is arranged in a cylindrical manner so as to surround the cylindrical shaft and that is rotatably provided around the cylindrical shaft; and a casing surrounding the filter, wherein untreated water is filtered through the filter from an outer circumferential surface to an inner circumferential surface of the filter, the resulting filtered water is guided into the cylindrical shaft and then guided to the outside of the casing, and discharge water that has not been filtered by the filter is discharged to the outside of the casing,
the filter includes a plurality of divided filters arranged in an axial direction of the cylindrical shaft, and the divided filters can be individually detached from the cylindrical shaft.

3. The filtering apparatus according to Claim 1 or 2, wherein each of the divided filters has a structure in which ring-shaped disks are fixed to an upper surface and a lower surface of a cylindrical filter element in the same axis, and a plurality of reinforcing rods are disposed between the upper ring-shaped disk and the lower ring-shaped disk and in the circumferences of the ring-shaped disks, and an upper divided filter and a lower divided filter are integrated by connecting and fixing the upper and lower reinforcing rods.

4. The filtering apparatus according to Claim 3, wherein the reinforcing rods of the upper and lower divided filters are connected and fixed by a threaded connection between ends of the upper and lower reinforcing rods.

5. The filtering apparatus according to any one of Claims 1 to 4, wherein a reinforcing body that supports the divided filters is provided in the casing, and the reinforcing body includes an upper support disk to which an uppermost divided filter is fixed in the same axis, a lower support disk to which a lowermost divided filter is fixed in the same axis, and a plurality of connecting rods which extend in the vertical direction and which are disposed between the upper support disk and the lower support disk and in the circumferences of the support disks to integrate the two support disks and hold the divided filters.

6. The filtering apparatus according to Claims 5, wherein each of the connecting rods includes divided connecting rods arranged in the vertical direction, the divided connecting rods are connected together with a ring-shaped intermediate support disk therebetween, and an upper divided connecting rod and a lower divided connecting rod which are disposed with the intermediate support disk therebetween are displaced from each other in a circumferential direction of the support disk.

7. The filtering apparatus according to any one of Claims 1 to 6, wherein the divided filters are each configured so that the untreated water is guided from the outer circumferential surface to the inner circumferential surface without flowing from an upper surface and a lower surface, the divided filters are integrally connected together in the vertical direction, and a sealing member is interposed between the entire circumferences of facing surfaces of adjacent upper and lower divided filters.

8. The filtering apparatus according to any one of Claims 1 to 7, wherein one wall that extends in the vertical direction is provided on an entire circumference of one of the facing surfaces of the adjacent upper and lower divided filters, another wall facing the entire circumference of the one wall is provided on the other entire circumference of the facing surfaces, and the sealing member is disposed over the entire circumference between the two walls.

9. The filtering apparatus according to any one of Claims 1 to 8, being an apparatus for treating ballast water for a ship.

10. A filter for a filtering apparatus, the filter being used in the filtering apparatus according to any one of Claims 1 to 9, wherein the divided filters are integrally connected together in the vertical direction, and a sealing member is interposed between the entire circumferences of facing surfaces of adjacent upper and lower divided filters.

11. The filter for a filtering apparatus according to Claim 10, wherein each of the divided filters has a structure in which ring-shaped disks are fixed to an upper surface and a lower surface of a cylindrical filter element in the same axis, and a plurality of reinforcing rods are disposed between the upper ring-shaped disk and the lower ring-shaped disk and in the circumferences of the ring-shaped disks, and an upper divided filter and a lower divided filter are integrated by connecting and fixing the reinforcing rods.

12. The filter for a filtering apparatus according to Claim 11, wherein the reinforcing rods of the upper and lower divided filters are connected and fixed by a threaded connection between ends of the upper and lower reinforcing rods.

13. The filter for a filtering apparatus according to any one of Claims 10 to 12, wherein the divided filters are each supported by a reinforcing body provided in the casing, and the reinforcing body includes an upper support disk to which an uppermost divided filter is fixed in the same axis, a lower support disk to which a lowermost divided filter is fixed in the same axis, and a plurality of connecting rods which extend in the vertical direction and which are disposed between the upper support disk and the lower support disk and in the circumferences of the support disks to integrate the two support disks and hold the divided filters.

14. The filter for a filtering apparatus according to Claim 13, wherein each of the connecting rods includes divided connecting rods arranged in the vertical direction, the divided connecting rods are connected together with a ring-shaped intermediate support disk therebetween, and an upper divided connecting rod and a lower divided connecting rod which are disposed with the intermediate support disk therebetween are displaced from each other in a circumferential direction of the support disk.

15. The filter for a filtering apparatus according to any one of Claims 10 to 14, wherein one wall that extends in the vertical direction is provided on an entire circumference of one of the facing surfaces of the adjacent upper and lower divided filters, another wall facing the entire circumference of the one wall is provided on the other entire circumference of the facing surfaces, and the sealing member is disposed over the entire circumference between the two walls.

16. A filter element for a filtering apparatus, the filter element forming one of the divided filters included in the filter for a filtering apparatus according to Claim 15, comprising one wall that extends in the vertical direction and that is disposed on an entire circumference of one of the facing surfaces of the adjacent upper and lower divided filters, wherein the sealing member is disposed over the entire circumference between the one wall and another wall of the other facing surface of the other divided filter, the another wall facing the one wall.
